# EUROPEAN PATENT SPECIFICATION

(11) **EP 3 114 893 B1**
(45) Date of publication and mention of the grant of the patent: **25.04.2018**
(21) Application number: 15712210.2
(22) Date of filing: 03.03.2015
(51) Int. Cl.: H04W 72/12, H04W 88/06

(54) **IMPROVED THROUGHPUT IN MULTI-RAT DEVICES**
VERBESSERTER DURCHSATZ IN MULTI-RAT-VORRICHTUNGEN
DÉBIT AMÉLIORÉ POUR DISPOSITIFS MULTI-RAT

(30) Priority: 05.03.2014 US 201461948123 P; 02.03.2015 US 201514635610
(43) Date of publication of application: 11.01.2017
(73) Proprietor: Qualcomm Incorporated, San Diego, CA 92121-1714 (US)
(72) Inventor: BODDURU, Appala Naga, Raju, San Diego, California 92121-1714 (US); JOSEPH, Binil, Francis, San Diego, California 92121-1714 (US); BABBADI, Venkata, Appala Naidu, San Diego, California 92121-1714 (US)
(74) Representative: Dunlop, Hugh Christopher
(86) International application number: PCT/US2015/018451
(87) International publication number: WO 2015/134471

(56) References cited:
- WO-A1-2012/061765
- WO-A1-2012/088270
- US-A1- 2012 163 198
- US-A1- 2012 188 877
- US-A1- 2013 155 881
- US-A1- 2014 036 710

## Description

### BACKGROUND

### FIELD OF THE DISCLOSURE

The present disclosure, for example, relates to wireless communication systems, and more particularly to techniques for improving throughput in Long Term Evolution (LTE) time-division multiplexing (TDD) bands by optimizing inter-radio access technology (RAT) and intra-RAT measurement scheduling.

### DESCRIPTION OF THE RELATED ART

Wireless communications systems are widely deployed to provide various types of communication content such as voice, video, packet data, messaging, broadcast, and so on. These systems may be multiple-access systems capable of supporting communication with multiple users by sharing the available system resources (e.g., time, frequency, and power). Examples of such multiple-access systems include code-division multiple access (CDMA) systems, time-division multiple access (TDMA) systems, frequency-division multiple access (FDMA) systems, and orthogonal frequency-division multiple access (OFDMA) systems.

Generally, a wireless multiple-access communications system may include a number of base stations, each simultaneously supporting communication for multiple mobile devices. Base stations may communicate with mobile devices on downstream and upstream links. Each base station has a coverage range, which may be referred to as the coverage area of a cell.

Mobile devices may receive signals from multiple base stations simultaneously, or nearly simultaneously. In some cases, a mobile device may be equipped with a single radio frequency (RF) chain that may be equipped with a modem capable of communicating with base stations of different radio access technologies (RAT) at different times. In some cases, however, attempting to support inter-RAT communication can reduce data throughput- for instance, if a device attempts to simultaneously receive data and perform measurements. It may therefore be desirable to recognize potential conflicts in inter-RAT and/or intra-RAT scheduling, and to reschedule certain operations to avoid such conflicts.

US2013/155881A1 describes a method for prioritizing the performance of measurements during measurement gaps and the reception of multicast/broadcast content.

US2012/188877A1 describes a method for performing measurement of reference signals in the proper subframes of a first radio access technology (RAT) while operating in a second RAT.

US2012/163198A1 describes a method for performing a time division duplex-long term evolution (TDD-LTE) measurement in a time division synchronous code division multiple access (TD-SCDMA) system,

### SUMMARY

The invention relates to a method, an apparatus and a non-transitory computer-readable medium for wireless communication as set forth in the claims.

### BRIEF DESCRIPTION OF THE DRAWINGS

A further understanding of the nature and advantages of the present invention may be realized by reference to the following drawings. In the appended figures, similar components or features may have the same reference label. Further, various components of the same type may be distinguished by following the reference label by a dash and a second label that distinguishes among the similar components. If only the first reference label is used in the specification, the description is applicable to any one of the similar components having the same first reference label irrespective of the second reference label.
FIG. 1 shows a block diagram of a wireless communications system according to various embodiments;
FIG. 2 shows a block diagram of a wireless communications system according to various embodiments;
FIG. 3 shows a block diagram illustrating a frame structure for a time-division duplexing (TDD) carrier, which may be employed in accordance with various embodiments;
FIG. 4 shows a call flow diagram illustrating measurement scheduling optimization within a wireless communication system, according to various embodiments;
FIG. 5 shows a block diagram of an example device configured for measurement scheduling optimization in accordance with various embodiments;
FIG.6 shows a block diagram of an example device configured for measurement scheduling optimization in accordance with various embodiments;
FIG. 7 shows a block diagram of an example device configured for measurement scheduling optimization in accordance with various embodiments;
FIG. 8 shows a block diagram of an example device configured for measurement scheduling optimization in accordance with various embodiments;
FIG. 9 is a flowchart of a method for measurement scheduling optimization in a wireless communications system, according to various embodiments; and
FIG. 10 is a flowchart of a method for measurement scheduling optimization in a wireless communications system, according to various embodiments.

### DETAILED DESCRIPTION

Certain mobile devices, including devices with dual-SIM, dual-standby (DSDS) capability, may be equipped with multi-radio access technology (RAT) modems, which may actively schedule measurements to improve throughput to the device. In some cases, for a DSDS device, measurements for one RAT are scheduled during a time period that overlaps a scheduled communication of another RAT. For example, a device may be configured to operate with Long Term Evolution (LTE) and Global System for Mobile Communications (GSM). The device may be engaged in an LTE data call while the device is in a standby mode with respect to a GSM network. A cell measurement for the GSM network may be scheduled during the LTE data call. In such cases, the device may momentarily tune away from the LTE network to make the measurement for the GSM network. In other cases, the device may attempt a measurement on the LTE network while the LTE call is active.

These scheduling conflicts may result in decreased throughput for a downlink (DL) transmission (*e.g*., the LTE call) because, for example, the scheduled measurement may require the use of one of the device's antennas. That is, in a device that is utilizing several antennas for receive diversity, "stealing" one of the antennas to perform a measurement may decrease receive diversity, and thus throughput, at the device. In some embodiments, measurement scheduling conflicts may be addressed by rescheduling scheduled measurements during a time period when at least one device antenna is available for use *(e.g.,* not scheduled for a DL transmission). For example, if a measurement for one RAT is scheduled during a time period that overlaps a communication, such as a DL transmission on another RAT, the measurement may be rescheduled. Additionally or alternatively, if a measurement and a communication, such as a DL transmission, for a single RAT are scheduled to overlap in time, the measurement may be rescheduled. In other examples, if an out-of-service (OOS) frequency scan for one RAT is scheduled during a time period that overlaps a scheduled communication, such as a DL transmission, on another RAT, the OOS frequency scan may be rescheduled.

Techniques described herein may be used for various wireless communications systems such as CDMA, TDMA, FDMA, OFDMA, SC-FDMA, and other systems. The terms "system" and "network" are often used interchangeably. A CDMA system may implement a radio technology such as CDMA2000, Universal Terrestrial Radio Access (UTRA), etc. CDMA2000 covers IS-2000, IS-95, and IS-856 standards. IS-2000 Releases 0 and A are commonly referred to as CDMA2000 1X, 1X, etc. IS-856 (TIA-856) is commonly referred to as CDMA2000 1xEV-DO, High Rate Packet Data (HRPD), etc. UTRA includes Wideband CDMA (WCDMA) and other variants of CDMA. A TDMA system may implement a radio technology such as GSM. An OFDMA system may implement a radio technology such as Ultra Mobile Broadband (UMB), Evolved UTRA (E-UTRA), IEEE 802.11 (Wi-Fi), IEEE 802.16 (WiMAX), IEEE 802.20, Flash-OFDM, etc. UTRA and E-UTRA are part of Universal Mobile Telecommunication System (UMTS). LTE and LTE-Advanced (LTE-A) are new releases of UMTS that use E-UTRA. UTRA, E-UTRA, UMTS, LTE, LTE-A, and GSM are described in documents from an organization named "3rd Generation Partnership Project" (3GPP). CDMA2000 and UMB are described in documents from an organization named "3rd Generation Partnership Project 2" (3GPP2).

The techniques described herein may be used for the systems and radio technologies mentioned above as well as other systems and radio technologies. The description below, however, describes an LTE system for purposes of example, and LTE terminology is used in much of the description below, although the techniques are applicable beyond LTE applications.

Thus, the following description provides examples, and is not limiting of the scope, applicability, or configuration set forth in the claims. Changes may be made in the function and arrangement of elements discussed without departing from the and scope of the disclosure. Various embodiments may omit, substitute, or add various procedures or components as appropriate. For instance, the methods described may be performed in an order different from that described, and various steps may be added, omitted, or combined. Also, features described with respect to certain embodiments may be combined in other embodiments.

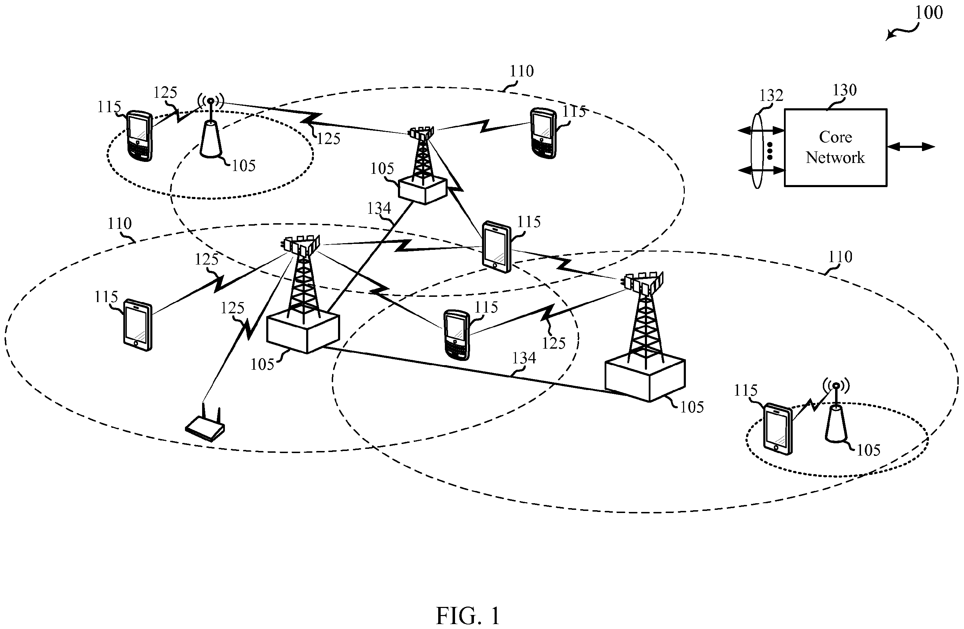

Referring first to **FIG. 1****,** a block diagram illustrates an example of a wireless communications system 100. The wireless communications system 100 includes base stations (or cells) 105, user equipments (UEs) 115, and a core network 130. The base stations 105 may communicate with the UEs 115 under the control of a base station controller (not shown), which may be part of the core network 130 or the base stations 105 in various embodiments. Base stations 105 may communicate control information and/or user data with the core network 130 through backhaul links 132. Backhaul links 132 may be wired backhaul links (*e.g.,* copper, fiber, etc.) and/or wireless backhaul links (*e.g.,* microwave, etc.). In some embodiments, the base stations 105 may communicate, either directly or indirectly, with each other over backhaul links 134, which may be wired or wireless communication links. The wireless communications system 100 may support operation on multiple carriers (waveform signals of different frequencies). Multi-carrier transmitters can transmit modulated signals simultaneously on the multiple carriers. For example, each communication link 125 may be a multi-carrier signal modulated according to the various radio technologies described above. Each modulated signal may be sent on a different carrier and may carry control information (*e.g*., reference signals, control channels, etc.), overhead information, data, etc.

The base stations 105 may wirelessly communicate with the devices 115 via one or more base station antennas. Each of the base station 105 sites may provide communication coverage for a respective coverage area 110. In some embodiments, base stations 105 may be referred to as a base transceiver station, a radio base station, an access point, a radio transceiver, a basic service set (BSS), an extended service set (ESS), a NodeB, eNodeB (eNB), Home NodeB, a Home eNodeB, or some other suitable terminology. The coverage area 110 for a base station may be divided into sectors making up only a portion of the coverage area (not shown). The wireless communications system 100 may include base stations 105 of different types (*e.g*., macro, micro, and/or pico base stations) and different RATs, including the various RATs discussed above (*e.g.*, CDMA, GSM, LTE, etc.) There may be overlapping coverage areas for different technologies such that a UE 115 may be served by base stations 105 of different RATs from a single location.

The UEs 115 are dispersed throughout the wireless communications system 100, and each device may be stationary or mobile. A UE 115 may also be referred to by those skilled in the art as a mobile station, a subscriber station, a mobile unit, a subscriber unit, a wireless unit, a remote unit, a mobile device, a wireless device, a wireless communications device, a remote device, a mobile subscriber station, an access terminal, a mobile terminal, a wireless terminal, a remote terminal, a handset, a user agent, a user equipment, a mobile client, a client, or some other suitable terminology. A UE 115 may be a cellular phone, a personal digital assistant (PDA), a wireless modem, a wireless UE, a handheld device, a tablet computer, a laptop computer, a cordless phone, a wireless local loop (WLL) station, or the like. A UE may be able to communicate with macro base stations, pico base stations, femto base stations, relay base stations, and the like. Additionally or alternatively, a UE 115 may be a DSDS device capable of simultaneously communicating via, or performing measurements for, multiple RATs. In some embodiments, a UE 115 may be configured to determine that a scheduled communication for a one RAT and a scheduled measurement for another RAT overlap in time; and the UE 115 may be configured to reschedule the measurement to avoid overlapping with the scheduled communication. In other embodiments, the core network 130 may reschedule measurements to avoid overlapping in time with scheduled communications.

The transmission links 125 shown in the wireless communications system 100 may include uplink (UL) transmissions from a mobile device 115 to a base station 105, and/or downlink (DL) transmissions, from a base station 105 to a mobile device 115. The DL transmissions may also be called forward link transmissions while the UL transmissions may also be called reverse link transmissions. The transmission links 125 may also depict measurements, including OOS frequency scans, conducted by a UE 115 to search for a RAT, and a base station 105, with which the mobile device 115 is not presently communicating.

In some embodiments, the wireless communications system 100 is an LTE/LTE-A network. In LTE/LTE-A networks, the terms evolved Node B (eNB) and user equipment (UE) may be generally used to describe the base stations 105 and UEs 115, respectively. The wireless communications system 100 may be a Heterogeneous LTE/LTE-A network in which different types of eNBs provide coverage for various geographical regions. For example, each base station 105 may provide communication coverage for a macro cell, a pico cell, a femto cell, and/or other types of cell. A macro cell generally covers a relatively large geographic area (*e.g*., several kilometers in radius) and may allow unrestricted access by UEs with service subscriptions with the network provider. A pico cell would generally cover a relatively smaller geographic area and may allow unrestricted access by UEs with service subscriptions with the network provider. A femto cell would also generally cover a relatively small geographic area (*e.g.,* a home) and, in addition to unrestricted access, may also provide restricted access by UEs having an association with the femto cell (*e.g.,* UEs in a closed subscriber group (CSG), UEs for users in the home, and the like). An eNB for a macro cell may be referred to as a macro eNB. An eNB for a pico cell may be referred to as a pico eNB. And, an eNB for a femto cell may be referred to as a femto eNB or a home eNB. An eNB may support one or multiple (*e.g*., two, three, four, and the like) cells.

The wireless communications system 100 according to an LTE/LTE-A network architecture may be referred to as an Evolved Packet System (EPS). The wireless communications system 100 may include one or more UEs 115, an Evolved UMTS Terrestrial Radio Access Network (E-UTRAN), an Evolved Packet Core (EPC) (*e.g.,* core network 130), a Home Subscriber Server (HSS), and an Operator's IP Services. The wireless communications system 100 may interconnect with other access networks using other RATs. For example, the wireless communications system 100 may interconnect with a UTRAN-based network and/or a CDMA-based network via one or more Serving General packet radio service (GPRS) Support Nodes (SGSNs). To support mobility of UEs 115 and/or load balancing, the wireless communications system 100 may support handover of UEs 115 between a source base station 105 and a target base station 105. The wireless communications system 100 may support intra-RAT handover between base stations 105 of the same RAT (*e.g.,* other E-UTRAN networks), and inter-RAT handovers between base stations of different RATs (*e.g*., E-UTRAN to CDMA, etc.). The wireless communications system 100 may provide packet-switched services, however, as those skilled in the art will readily appreciate, the various concepts presented throughout this disclosure may be extended to networks providing circuit-switched services.

The E-UTRAN may include the base stations 105 and may provide user plane and control plane protocol terminations toward the UEs 115. The base stations 105 may be connected to other base stations 105 via backhaul link 134 (*e.g.,* an X2 interface, and the like). The base stations 105 may provide an access point to the core network 130 for the UEs 115. The base stations 105 may be connected by backhaul link 132 (*e.g*., an S1 interface, and the like) to the core network 130. Logical nodes within core network 130 may include one or more Mobility Management Entities (MMEs), one or more Serving Gateways, and one or more Packet Data Network (PDN) Gateways (not shown). Generally, the MME may provide bearer and connection management. All user IP packets may be transferred through the Serving Gateway, which itself may be connected to the PDN Gateway. The PDN Gateway may provide UE Internet Protocol (IP) address allocation as well as other functions. The PDN Gateway may be connected to IP networks and/or the operator's IP Services. These logical nodes may be implemented in separate physical nodes or one or more may be combined in a single physical node. The IP Networks/Operator's IP Services may include the Internet, an Intranet, an IP Multimedia Subsystem (IMS), and/or a Packet-Switched (PS) Streaming Service (PSS).

The UEs 115 may be configured to collaboratively communicate with multiple base stations 105 through, for example, Multiple Input Multiple Output (MIMO), Coordinated Multi-Point (CoMP), or other schemes. MIMO techniques use multiple antennas on the base stations and/or multiple antennas on the UE to take advantage of multipath environments to transmit multiple data streams. CoMP includes techniques for dynamic coordination of transmission and reception by a number of eNBs to improve overall transmission quality for UEs as well as increasing network and spectrum utilization. Generally, CoMP techniques utilize backhaul links 132 and/or 134 for communication between base stations 105 to coordinate control plane and user plane communications for the UEs 115.

The communication networks that may accommodate some of the various disclosed embodiments may be packet-based networks that operate according to a layered protocol stack. In the user plane, communications at the bearer or Packet Data Convergence Protocol (PDCP) layer may be IP-based. A Radio Link Control (RLC) layer may perform packet segmentation and reassembly to communicate over logical channels. A Medium Access Control (MAC) layer may perform priority handling and multiplexing of logical channels into transport channels. The MAC layer may also use hybrid automatic repeat request (HARQ) techniques to provide retransmission at the MAC layer to ensure reliable data transmission. In the control plane, the Radio Resource Control (RRC) protocol layer may provide establishment, configuration, and maintenance of an RRC connection between the UE and the network used for the user plane data. At the Physical layer, the transport channels may be mapped to Physical channels.

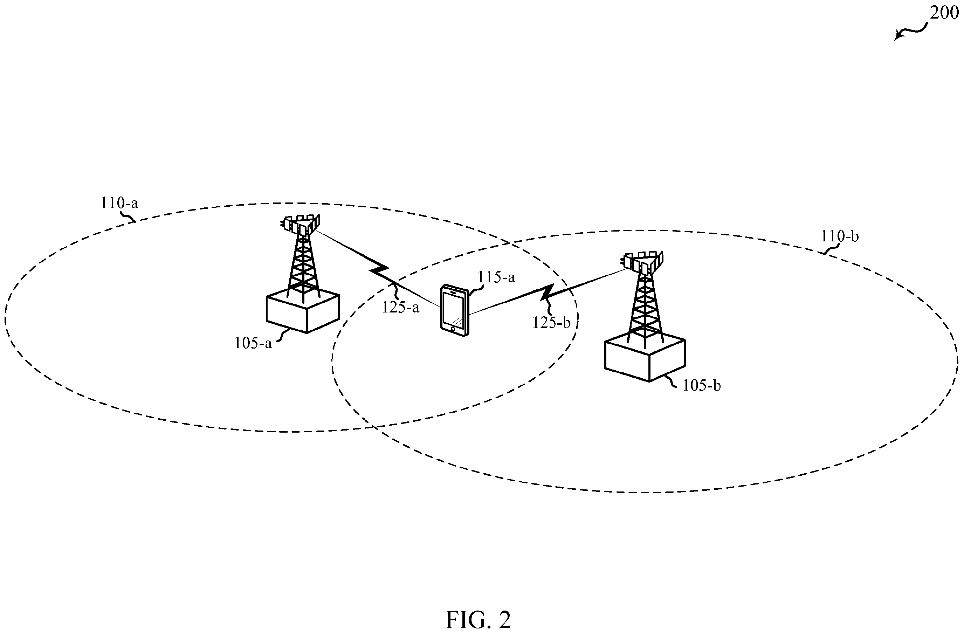

**FIG. 2** shows a block diagram of a wireless communications system 200 according to various embodiments. The wireless communications system 200 may be an example of aspects of the wireless communications system 100 of FIG. 1-*e.g*., the UE 115-a may be an example of the UEs 115 and the base stations 105-a, 150-b may be examples of base stations 105 of FIG. 1. The UE 115-a may be a DSDS device within the coverage areas 110 of the base stations 105. In some examples, the UE 115-a may be engaged in communication, via communication link 125-a, with the base station 105-a, which may utilize one RAT (*e.g.,* LTE). The UE 115-a may simultaneously be in a standby mode with, and intend to take measurements (*e.g*., via communication link 125-b) of signals from base station 105-b, which may utilize another RAT (*e.g.,* GSM, UMTS, etc.). The UE 115-a may determine that a scheduled communication over the LTE communication link 125-a and a scheduled measurement for the GSM communication link 125-b may overlap, at least partially, in time. The UE 115-a may thus reschedule the measurement for the GSM communication link 125-b to avoid overlapping with the scheduled communication via the LTE communication link 125-a.

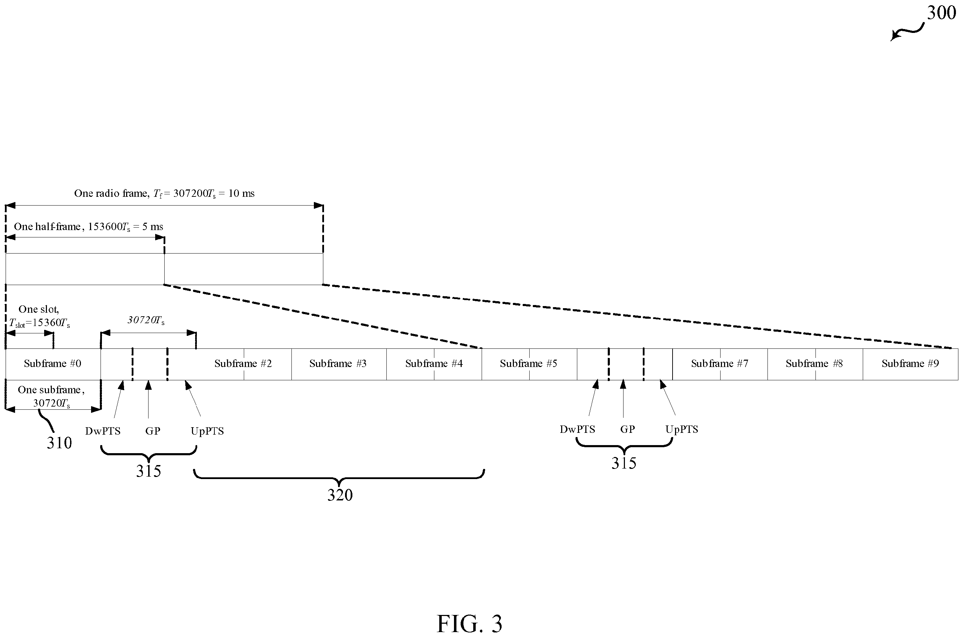

In some cases, the UE 115-a may identify a time-division duplexing (TDD) configuration, which the UE 115-a may utilize to determine scheduling conflicts. The UE 115-a may, for example, identify an LTE TDD configuration associated with the base station 105-a. **FIG. 3** illustrates a frame structure 300 for an LTE TDD carrier, which may be employed in the wireless communications systems 100 and/or 200 in accordance with various embodiments. Time intervals may be expressed in multiples of a basic time unit *Tₛ* = 1/30720000. Each frame structure may have a radio frame length *T_{f}* = 307200 · *Tₛ* = 10 ms and may include two half-frames or slots of length 153600 · *Tₛ* = 5 ms each. Each half-frame may include five subframes of length 30720 *· Tₛ* = 1 *ms.*

For TDD frame structures, each subframe 310 may carry UL or DL traffic, and special subframes ("S") 315 may be used to switch between DL to UL transmission. Allocation of UL and DL subframes within radio frames may be symmetric or asymmetric and may be reconfigured semi-statically or dynamically. S subframes 315 may carry some DL and/or UL traffic and may include a Guard Period (GP) between DL and UL traffic. Switching from UL to DL traffic may be achieved by setting timing advance at the UEs without the use of S subframes or a guard period between UL and DL subframes. TDD configurations with switch-point periodicity equal to the frame period (*e.g.,* 10 ms) or half of the frame period (*e.g.,* 5 ms) may be supported. For example, TDD frames may include one or more S subframes, and the period between S subframes may determine the TDD DL-to-UL switch-point periodicity for the frame.

In some examples, Subframe #0 310 may be a DL timeslot, which may include a scheduled DL transmission from one RAT. The UE 115-a may be equipped with several antennas, all of which may be scheduled for the DL transmission (*e.g*., in a receive diversity scheme) in the Subframe #0 310. The UE 115-a may also be configured to periodically perform measurements of another RAT. For instance, measurements may be scheduled to coincide with a paging cycle of the second RAT (*e.g*., every 470 ms). In some cases, the period for taking a measurement (*e.g*., a scheduled measurement) overlaps with a time during which a DL transmission is scheduled (*e.g.,* a DL timeslot, Subframe #0). In order to avoid "stealing," for the measurement, one of the antennas scheduled for the DL transmission, the measurement of another RAT may be rescheduled for another subframe. For instance, in some TDD configurations, Subframes #2 through #4 320 may be scheduled for UL transmissions, which may not utilize all antennas of the UE 115-a. Accordingly, the UE 115-a may reschedule measurements to occur during one or more of Subframes #2 through #4 320, where at least one antenna is available for such measurements. In some cases, all the measurements of a second RAT are rescheduled during the UL timeslot 320 (*e.g*., subframes #2 through #4) of a first RAT, where diversity chain is available. In some cases, the UE 115-a may determine that DL transmissions from a first RAT associated with the base station 105-a are scheduled during the Subframe #0 310 and it may schedule measurements of that RAT during another subframe, such as one or more of Subframes #2 through #4 320 to avoid overlapping with the scheduled communication-*e.g*., a DL transmission. In some embodiments, a measurement may, alternatively, be rescheduled for an S subframe.

For LTE/LTE-A, seven different TDD DL/UL configurations are defined that provide between 40% and 90% DL subframes, as illustrated in Table 1.

**Table 1: TDD Configurations**

| **TDD Configuration** | **Period (ms)** | **Subframe** | | | | | | | | | |
|---|---|---|---|---|---|---|---|---|---|---|---|
| | | **0** | **1** | **2** | **3** | **4** | **5** | **6** | **7** | **8** | **9** |
| 0 | 5 | D | S | U | U | U | D | S | U | U | U |
| 1 | 5 | D | S | U | U | D | D | S | U | U | D |
| 2 | 5 | D | S | U | D | D | D | S | U | D | D |
| 3 | 10 | D | S | U | U | U | D | D | D | D | D |
| 4 | 10 | D | S | U | U | D | D | D | D | D | D |
| 5 | 10 | D | S | U | D | D | D | D | D | D | D |
| 6 | 5 | D | S | U | U | U | D | S | U | U | D |

The particular TDD configuration used by an LTE cell is broadcast in system information block (SIB) 1 on a broadcast control channel (BCCH) for that cell. Thus, in some embodiments, the UE 115-a may identify a TDD configuration by decoding SIB1 received from a base station 105 with which the UE 115-a is communicating.

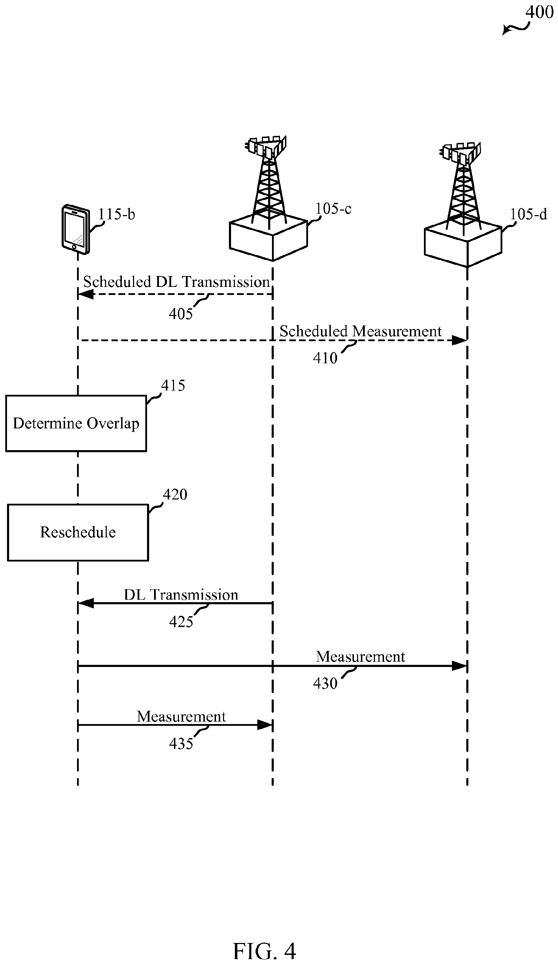

Turning next to **FIG. 4****,** shown is a call flow diagram 400 illustrating measurement scheduling optimization within a wireless communications system, according to various embodiments. The mobile device 115-b and the base stations 105-c, 105-d may be examples of the UEs and base stations of FIGS. 1 and 2. In some embodiments, the mobile device 115-b is a DSDS device operating in a DSDS mode. The mobile device 115-b may identify a TDD configuration of a first RAT associated with the base station 105-c. The first RAT may be LTE, and the identified TDD configuration may be one of the LTE TDD configurations discussed above, identified by decoding SIB1 broadcast by the base station 105-c.

The mobile device 115-b may recognize a scheduled DL transmission 405 for a first RAT associated with the base station 105-c; it may also recognize a scheduled measurement 410 of for a second RAT associated with the base station 105-d. Based in part on the identified TDD configuration, for example, the mobile device 115-b may, at block 415, determine that the scheduled DL transmission 405 and the scheduled measurement 410 overlap in time. By way of example, the mobile device 115-b may be scheduled by the base station 105-c to receive data during Subframe #0 of a TDD frame. The mobile device 115-b may also be scheduled to perform a periodic measurement on the RAT for the base station 105-d; and an instance of the periodic measurement may align with the Subframe #0. The mobile device 115-b may thus determine the scheduled measurement 410 is scheduled during a time that overlaps with a scheduled DL transmission 405.

In some cases, the scheduled measurement is an inter-RAT measurement. The measurements may include measurements of: signal phase, signal strength, reference signal received power (RSRP), reference signal received quality (RSRQ), and the like. In other embodiments, the scheduled measurement is an OOS frequency scan-including a scan for network with which the mobile device 115-b is not presently communicating.

The mobile device 115-b may, at block 420, reschedule the measurement of the second RAT (associated with the base station 105-d). For example, the mobile device 115-b may reschedule the measurement for an UL timeslot. The mobile device 115-b may then receive a DL transmission 425 at the scheduled time; and the mobile device 115-b may proceed to conduct a measurement 430 of the second RAT (associated with the base station 105-d) at the rescheduled time. Additionally or alternatively, the mobile device 115-b may conduct a measurement 435 of the first RAT (associated with the base station 105-c) at a scheduled time that does not overlap the DL transmission for the first RAT. In some embodiments, the core network 130 (FIG. 1) may schedule intra-RAT measurements to avoid overlapping in time with communications for that RAT. Thus, the mobile device 115-b may implement intra-RAT scheduling as directed by the core network 130.

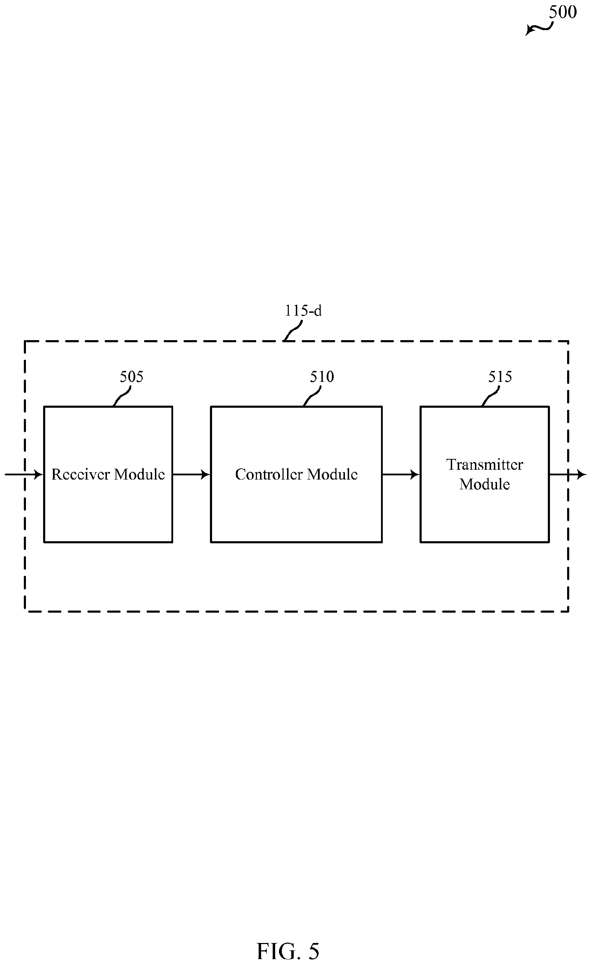

Next, **FIG. 5** depicts a block diagram 500 of a device(s) 115-d configured for scheduling optimization in accordance with various embodiments. The device 115-d may be an example of the UEs and/or devices 115 described with reference to FIGS. 1, 2, and/or 4; and it may be configured to perform the same or similar functions. The device 115-d may include a receiver module 505, a controller module 510, and/or a transmitter module 515, which may each be in communication with one another. In some embodiments, one or more aspects of the device 115-d is a processor.

The device 115-d may be configured to communicate utilizing one or several RATs. The controller module 510 may be configured to identify a TDD configuration for one or more RATs. The controller module 510 may also be configured to determine, *e.g*., based on the identified TDD of one RAT, that a scheduled communication for that RAT and a scheduled measurement for another RAT at least partially overlap in time. For instance, the controller module 510 may be configured to recognize that a DL timeslot of a TDD configuration for one RAT and an instance of a periodic measurement for another RAT coincide. The controller module 510 may thus be configured to reschedule the measurement to avoid overlapping the scheduled communication such as a DL transmission in an DL timeslot. In some embodiments, the controller module 510 is configured to reschedule the measurement during an UL timeslot of the identified TDD. For example, the controller module 510 may be configured to determine a DL transmission for the first RAT (*e.g.,* LTE) in an DL timeslot overlaps in time with a measurement for the second RAT (*e.g.,* GSM) during an UL timeslot of the first RAT. In this example, the controller module 510 may be configured to reschedule the measurement for the second RAT during the UL timeslot of the first RAT. In some embodiments, the controller module 510 may be configured to perform a measurement based on the rescheduling.

The receiver module 505 may be configured to receive a DL transmission according to the schedule. The receiver module 505 may additionally be configured to receive signals (*e.g*., reference signals, pilot signals, etc.) to allow the controller module 510 to conduct measurements. The transmitter module 515 may be configured to transmit UL control and data communications-*e.g*., to a base station 105.

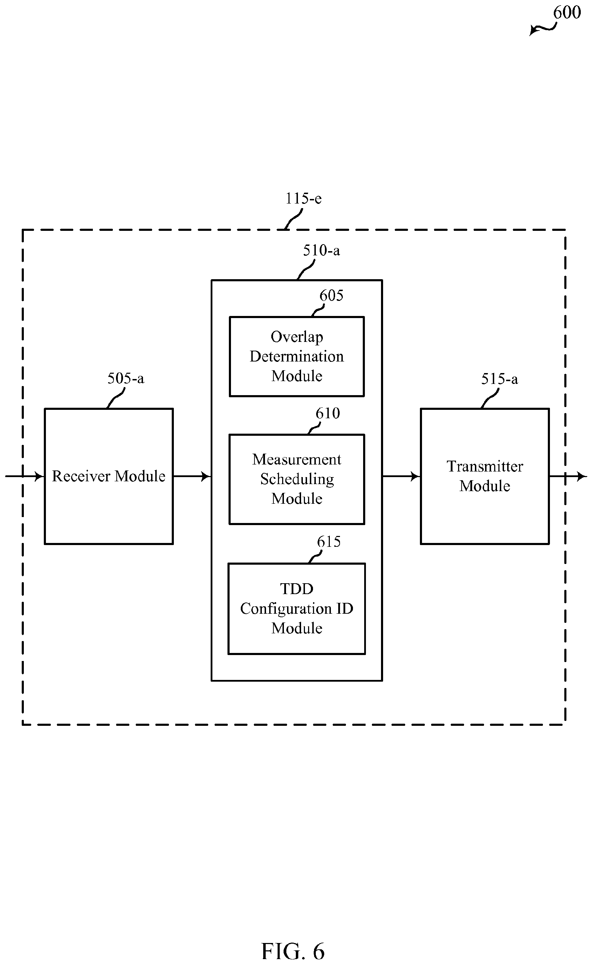

Turning now to **FIG. 6****,** shown is a block diagram 600 of a device 115-e configured for measuring scheduling optimization in accordance with various embodiments. The device 115-e may be an example of the UEs and/or devices 115 described with reference to FIGS. 1, 2, 4, and/or 5; and it may be configured to perform the same or similar functions. The device 115-e may include a receiver module 505-a, a controller module 510-a, and/or a transmitter module 515-a, which may each be in communication with one another, and which may be configured to perform the functions of the corresponding modules of FIG. 5. Various aspects of the device 115-e may be implemented with a processor.

The controller module 510-a may include an overlap determination module 605, a measurement scheduling module 610, and/or a TDD configuration identification (ID) module 615. The overlap determination module 605 may be configured to determine that a scheduled communication for one RAT and a scheduled measurement for another RAT at least partially overlap in time. Such a determination may be based, in part, on a TDD configuration for one of the RATs. For example, the overlap determination module 605 may be configured to determine that an instance of a periodic measurement for one RAT is scheduled to coincide with a DL timeslot for another RAT. In some embodiments, the overlap determination module 605 may be configured to recognize that a DL transmission for a first RAT and a measurement for a second RAT are scheduled to occur during the DL timeslot of a TDD configuration. The measurement scheduling module 610 may be configured to, based on the determination of overlap in a scheduled communication and a scheduled measurement, reschedule the measurement to avoid the overlap. For example, the measurement scheduling module may be configured to reschedule a measurement to coincide with an UL timeslot of a TDD configuration. In some embodiments, the measurement scheduling module 610 may be configured to perform a measurement based on the rescheduling.

In some embodiments, the TDD configuration ID module 615 may be configured to identify a TDD configuration for one or several RATs. The TDD configuration ID module 615 may be configured to identify an LTE TDD configuration which the overlap determination module 605 may utilize to determine whether a scheduled communication and a schedule measurement overlap in time.

The components of the devices 115-d and/or 115-e of FIGS. 5 and 6 may, individually or collectively, be implemented with one or more application-specific integrated circuits (ASICs) adapted to perform some or all of the applicable functions in hardware. Alternatively, the functions may be performed by one or more other processing units (or cores), on one or more integrated circuits. In other embodiments, other types of integrated circuits may be used (*e.g*., Structured/Platform ASICs, Field Programmable Gate Arrays (FPGAs), and other Semi-Custom ICs), which may be programmed in any manner known in the art. The functions of each unit may also be implemented, in whole or in part, with instructions embodied in a memory, formatted to be executed by one or more general or application-specific processors.

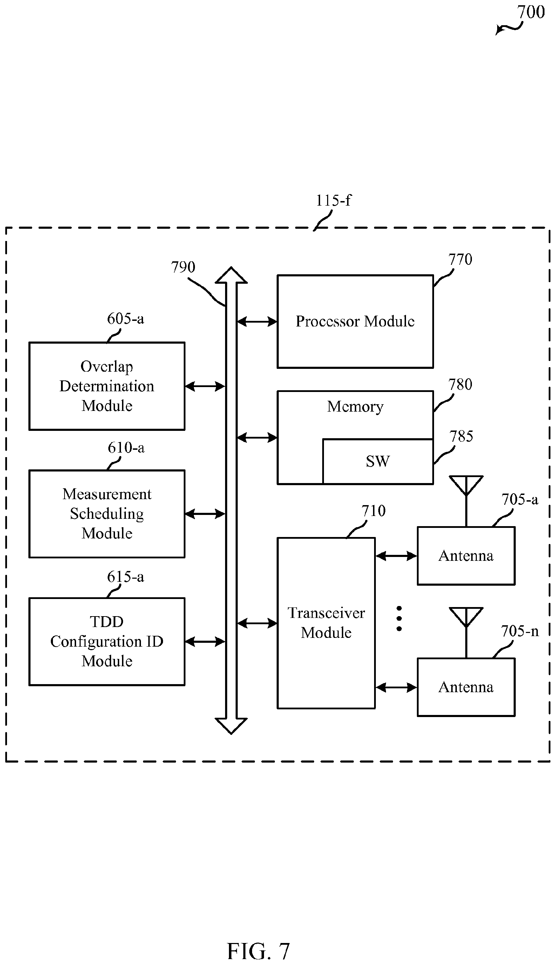

Next, in **FIG. 7****,** shown is a block diagram 700 of mobile device 115-f configured for scheduling optimization according various embodiments. The mobile device 115-f may have any of various configurations, such as personal computers (*e.g*., laptop computers, netbook computers, tablet computers, etc.), cellular telephones, PDAs, smartphones, digital video recorders (DVRs), internet appliances, gaming consoles, e-readers, etc. In some embodiments, the mobile device 115-f is a DSDS device (*e.g*., phone) configured for DSDS operation. The mobile device 115-f may have an internal power supply (not shown), such as a small battery, to facilitate mobile operation. In some embodiments, the mobile device 115-f may be an example of the devices and UEs 115 of FIGS. 1, 2, 4, 5, and/or 6.

The mobile device 115-f may generally include components for bi-directional voice and data communications including components for transmitting communications and components for receiving communications. The mobile device 115-f may include antennas 705-a through 705-n, a transceiver module 710, a processor module 770, and memory 780 (including software (SW) 785), which each may communicate, directly or indirectly, with each other (*e.g.,* via one or more buses 790). The transceiver module 710 may be configured to communicate bi-directionally, via the antennas 705 and/or one or more wired or wireless links, with one or more RATs, as described above. For example, the transceiver module 710 may be configured to communicate bi-directionally with base stations 105 as described herein. The transceiver module 710 may include a modem configured to modulate packets and provide the modulated packets to the antennas 705 for transmission, and to demodulate packets received from the antennas 705. While the mobile device 115-f may include a single antenna 705-a, the mobile device 115-f may have multiple antennas 705 capable of concurrently transmitting and/or receiving multiple wireless transmissions. The transceiver module 710 may be configured to utilize multiple SIM cards (*e.g.,* a dual-SIM device). The transceiver module 710 may further be configured to maintain active subscriptions for the multiple SIM cards. The transceiver module 710 may operate in a dual-standby mode, such that either subscription may be utilized at a given instant via a common RF chain.

The memory 780 may include random access memory (RAM) and read-only memory (ROM). The memory 780 may store computer-readable, computer-executable software/firmware code 785 containing instructions that are configured to, when executed, cause the processor module 770 to perform various functions described herein (*e.g.,* determining rescheduling a measurement to a time period during which an antenna 705 is available for use, etc.). Alternatively, the software/firmware code 785 may not be directly executable by the processor module 770 but may be configured to cause a computer (*e.g*., when compiled and executed) to perform functions described herein.

The processor module 770 may include an intelligent hardware device, *e.g.,* a central processing unit (CPU), a microcontroller, an ASIC, etc. The mobile device 115-f may include a speech encoder (not shown) configured to receive audio via a microphone, convert the audio into packets (*e.g.,* 20 ms in length, 30 ms in length, etc.) representative of the received audio, provide the audio packets to the transceiver module 710, and provide indications of whether a user is speaking.

According to the architecture of FIG. 7, the mobile device 115-f may further include an overlap determination module 605-a, a measurement scheduling module 610-a, and/or a TDD configuration ID module 615-a, which may be substantially the same as the overlap determination module 605, the measurement scheduling module 610, and the TDD configuration ID module 615 of FIG. 6.

In some cases, the overlap determination module 605-a may be configured to determine that a scheduled LTE transmission (*e.g*., a DL timeslot) is scheduled to use all antennas 705 of the mobile device 115-f, and the scheduled LTE transmission and a scheduled measurement of a GSM network will overlap in time. In some cases, the scheduled measurement is an inter-RAT measurement; in other cases it is an OOS search for a second RAT. The measurement scheduling module 610-a may be configured, based on such a determination, to reschedule the GSM measurement to a time period during which one of the antennas 705 is available for use.

In some embodiments, the overlap determination module 605-a is configured to determine that a scheduled communication for a RAT (*e.g.,* LTE) and a scheduled measurement for that RAT are scheduled to occur during a common time period (*e.g.,* scheduled to overlap in time). The measurement scheduling module 610-a may thus be configured to schedule, or reschedule, a measurement of the RAT to avoid overlapping with the scheduled communication-*e.g*., during a time period when one of the antennas 705 is available, and to perform the measurement of the RAT based on the rescheduling.

By way of example, the overlap determination module 605-a, the measurement scheduling module 610-a, and/or the TDD configuration ID module 615-a may be components of the mobile device 115-f in communication with some or all of the other components of the mobile device 115-f via the bus 790. Alternatively, functionality of these modules may be implemented as a component of the transceiver module 710, as a computer program product, and/or as one or more controller elements of the processor module 770.

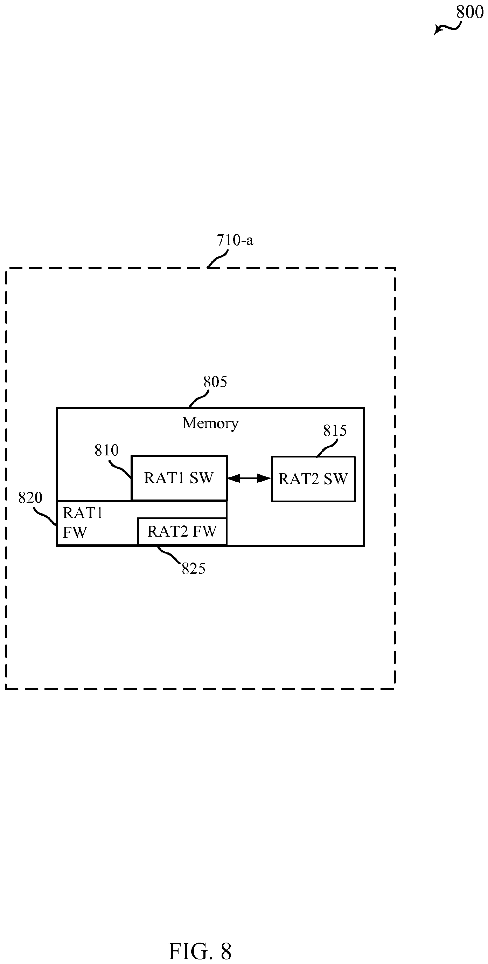

**FIG. 8** shows a block diagram 800 of an example device 710-a configured for measurement scheduling optimization, in accordance with various embodiments. The device 710-a may be an example of the transceiver module 710 described with reference to FIG. 7. In some embodiments, the device 710-a is a DSDS modem. The device 710-a may include memory 805, including RAM and/or ROM. The memory 805 may store computer-readable, computer-executable software (SW) 810, 815 and firmware (FW) 820 containing instructions that are configured to, when executed, cause a processor (not shown) within the device 710-a and/or the processor module 770 (FIG. 7) to perform various functions described herein. Alternatively, the software/firmware code may not be directly executable but may be configured to cause a computer (*e.g*., when compiled and executed) to perform functions described herein.

The memory 805 may include RAT1 SW 810 and RAT2 SW 815, which may be software configured to operate the device 710-a according to different RATs. In some embodiments, RAT1 is LTE and RAT2 is GSM or UMTS. The memory 805 may further include RAT1 FW 820, which may be configured with RAT2 FW 825. RAT2 FW 825 may be a duplication-*e.g*., a "light weight" version-of firmware configured to control measurements for RAT2. As depicted, RAT2 FW 825 may be an aspect of, and run as part of, RAT1 FW 820.

As discussed above, in some embodiments, a mobile device 115, of which the device 710-a may be a part, is configured to reschedule a measurement to coincide with an UL timeslot of a TDD configuration. Thus, an UL timeslot for RAT1 may need to be "filled" with a measurement for RAT2. In order to accomplish this, RAT1 SW 810 and RAT2 SW 815 may need to interface with one another. RAT1 SW 810 and RAT2 SW 815 may be configured to control scheduling and timing functionality, at the logical frame level, for RAT1 and RAT2, respectively. Interfacing between RAT1 SW 810 and RAT2 SW 815 may allow for shared scheduling between RAT1 and RAT2.

In order to expediently make measurements for RAT2 according to the RAT1 TDD configuration, it may be beneficial to incorporate RAT2 FW 825 into RAT1 FW 820. For example, those skilled in the art will recognize that multiple standalone firmware implementations may lead to time-intensive operation of a mobile device. Thus, implementing the RAT2 FW 825 as an aspect of the RAT1 FW 820 may offer time-saving benefits by allowing RAT1 FW 820 to control measurements for RAT2 according to the TDD configuration of RAT1.

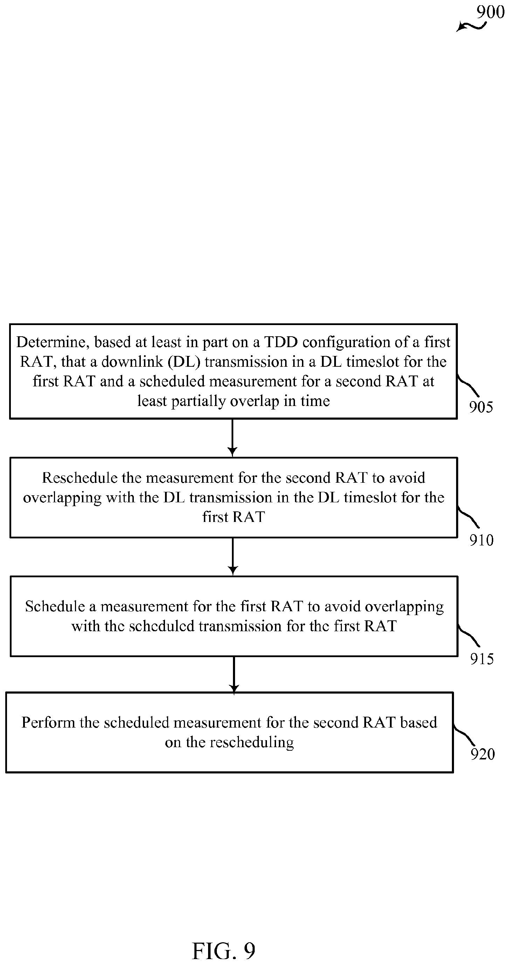

Turning now to **FIG. 9****,** shown is a flowchart of a method 900 for scheduling optimization in a wireless communications system, according to various embodiments. The method 900 may be implemented by one or more mobile devices 115 of the preceding figures. At block 905, the method may include determining, based at least in part on a TDD configuration of a first RAT, that a scheduled communication for the first RAT and a scheduled measurement for a second RAT at least partially overlap in time. The scheduled communication for the first RAT may include a DL transmission in a DL timeslot, while the scheduled measurement for the second RAT may include an inter-RAT measurement or an OOS search for the second RAT. The operations of block 905 may be performed by the controller modules 510 of FIGS. 5 and 6 and/or the overlap determination modules 605 of FIGS. 6 and 7, and/or the transceiver modules 710 of FIGS. 7 and 8.

At block 910, the method may include rescheduling the measurement for the second RAT to avoid overlapping with the DL transmission in the DL timeslot for the first RAT. Rescheduling may include rescheduling the measurement during an UL timeslot of the first RAT. In some embodiments, the mobile devices 115 may include a plurality of antennas (*e.g.,* a multi-antenna device), and the scheduled transmission for the first RAT including a DL transmission in a DL timeslot may include utilizing the plurality of antennas. In such embodiments, rescheduling the measurement for the second RAT may include rescheduling the measurement for a time period when at least one antenna is available. The operations of block 910 may be performed by the controller modules 510 of FIGS. 5 and 6 and/or the measurement scheduling modules 610 of FIGS. 6 and 7, and/or the transceiver modules 710 of FIGS. 7 and 8.

At block 915, the method may further include scheduling a measurement for the first RAT to avoid overlapping with the scheduled communication for the first RAT. In some embodiments, this scheduling may include scheduling the measurement for a time period when at least one antenna of a multi-antenna device is available. The operations of block 915 may be performed by the controller modules 510 of FIGS. 5 and 6 and/or the measurement scheduling modules 610 of FIGS. 6 and 7, and/or the transceiver modules 710 of FIGS. 7 and 8.

At block 920, the method may further include performing the scheduled measurement for the second RAT based on the rescheduling. For example, a measurement for the second RAT (*e.g.,* GSM) that was scheduled to perform during a DL timeslot of the first RAT (*e.g.,* LTE) may be performed during an UL timeslot of the first RAT without overlapping with a DL transmission in the DL timeslot for the first RAT.

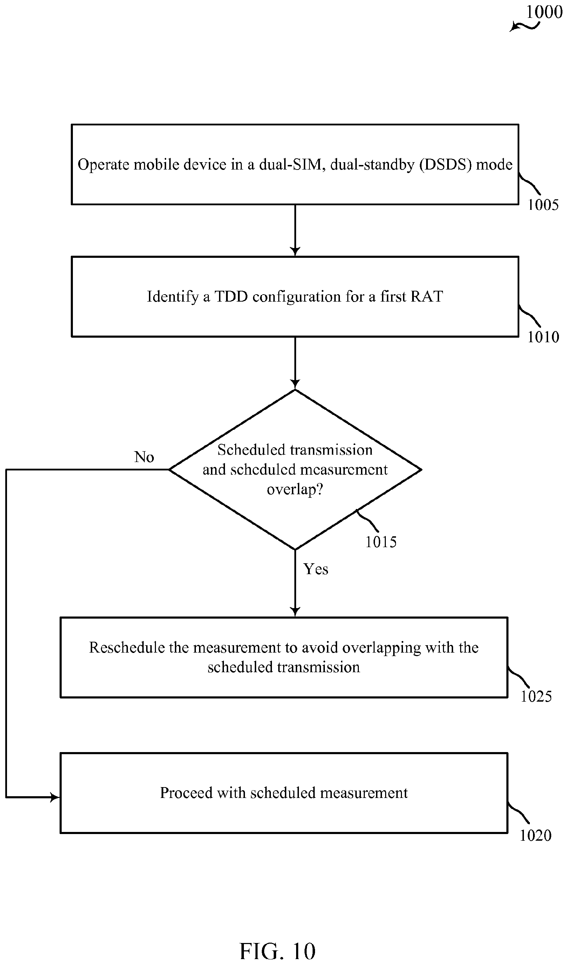

Next, **FIG. 10** is a flowchart of a method 1000 for scheduling optimization in a wireless communications system, according to various embodiments. The method 1000 may be an example of the method 900. The method 1000 may be implemented by one or more mobile devices 115 of the preceding figures. In some embodiments, the method 1000 is implemented with a DSDS-configured device. At block 1005, the method may therefore include operating a mobile device in a DSDS mode.

At block 1010, the method may include identifying a TDD configuration for a first RAT. The operations of block 1010 may be implemented by the controller modules 510 of FIGS. 5 and 6 and/or the TDD configuration ID modules 615 of FIGS. 6 and 7, and/or the transceiver modules 710 of FIGS. 7 and 8.

At block 1015, the method may include determining whether a scheduled communication for the first RAT and a scheduled measurement for a second RAT overlap. The scheduled communication for the first RAT may include a DL transmission in a DL timeslot, while the scheduled measurement for the second RAT may include an inter-RAT measurement or an OOS search for the second RAT. The operations of block 1015 may be implemented by the controller modules 510 of FIGS. 5 and 6 and/or the overlap determination modules 605 of FIGS. 6 and 7, and/or the transceiver modules 710 of FIGS. 7 and 8. If at block 1015 a determination is "No," the method may involve, at block 1020, proceeding with the scheduled measurement. For example, the device may proceed with periodic measurements for the second RAT according to a pre-determined periodicity. If, however, a determination at block 1015 is "Yes," the method may include, at block 1025, rescheduling the measurement for the second RAT to avoid overlapping with the scheduled communication for the first RAT. For instance, a measurement scheduled to coincide with a DL transmission in a DL timeslot of the first RAT may be rescheduled to an UL timeslot of the first RAT, a time period during which the device may have an available antenna. The operations of blocks 1020 and 1025 may be implemented by the controller modules 510 of FIGS. 5 and 6 and/or the measurement scheduling modules 610 of FIGS. 6 and 7, and/or the transceiver modules 710 of FIGS. 7 and 8.

The detailed description set forth above in connection with the appended drawings describes example embodiments and does not represent the only embodiments that may be implemented or that are within the scope of the claims. The detailed description includes specific details for the purpose of providing an understanding of the described techniques. These techniques, however, may be practiced without these specific details. In some instances, well-known structures and devices are shown in block diagram form in order to avoid obscuring the concepts of the described embodiments.

Information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

The various illustrative blocks and modules described in connection with the disclosure herein may be implemented or performed with a general-purpose processor, a digital signal processor (DSP), an ASIC, an FPGA or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices, *e.g.,* a combination of a DSP and a microprocessor, multiple microprocessors, one or more microprocessors in conjunction with a DSP core, or any other such configuration.

The functions described herein may be implemented in hardware, software executed by a processor, firmware, or any combination thereof. If implemented in software executed by a processor, the functions may be stored on or transmitted over as one or more instructions or code on a computer-readable medium. Other examples and implementations are within the scope and of the disclosure and appended claims. For example, due to the nature of software, functions described above can be implemented using software executed by a processor, hardware, firmware, hardwiring, or combinations of any of these. Features implementing functions may also be physically located at various positions, including being distributed such that portions of functions are implemented at different physical locations. Also, as used herein, including in the claims, "or" as used in a list of items prefaced by "at least one of" indicates a disjunctive list such that, for example, a list of "at least one of A, B, or C" means A or B or C or AB or AC or BC or ABC (i.e., A and B and C).

Computer-readable media includes both computer storage media and communication media including any medium that facilitates transfer of a computer program from one place to another. A storage medium may be any available medium that can be accessed by a general purpose or special purpose computer. By way of example, and not limitation, computer-readable media can comprise RAM, ROM, electrically erasable programmable ROM (EEPROM), compact disk ROM (CD-ROM) or other optical disk storage, magnetic disk storage or other magnetic storage devices, or any other medium that can be used to carry or store desired program code means in the form of instructions or data structures and that can be accessed by a general-purpose or special-purpose computer, or a general-purpose or special-purpose processor. Also, any connection is properly termed a computer-readable medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. Disk and disc, as used herein, include CD, laser disc, optical disc, digital versatile disc (DVD), floppy disk and blu-ray disc where disks usually reproduce data magnetically, while discs reproduce data optically with lasers. Combinations of the above are also included within the scope of computer-readable media.

The previous description of the disclosure is provided to enable a person skilled in the art to make or use the disclosure. Various modifications to the disclosure will be readily apparent to those skilled in the art, and the generic principles defined herein may be applied to other variations without departing from the scope of the claims. Throughout this disclosure the term "example" or "exemplary" indicates an example or instance and does not imply or require any preference for the noted example. Thus, the disclosure is not to be limited to the examples and designs described herein but is to be accorded the widest scope consistent with the claims.

## Claims

1. A method (900) of wireless communication with a device configured for communication utilizing a first radio access technology, RAT, and a second RAT, the method comprises:
determining (905), based at least in part on a time-division duplexing, TDD, configuration of the first RAT, that a downlink, DL, transmission in a DL timeslot for the first RAT and a scheduled measurement for the second RAT at least partially overlap in time during a first subframe of a frame;
rescheduling (910) the scheduled measurement for the second RAT to a second subframe of the frame to avoid overlapping with the DL transmission in the DL timeslot for the first RAT; and
performing (920) the scheduled measurement for the second RAT based on the rescheduling.

2. The method (900) of claim 1, further comprising:
identifying the TDD configuration of the first RAT.

3. The method (900) of claim 1, wherein the rescheduling (910) comprises rescheduling the scheduled measurement for the second RAT during an uplink, UL, timeslot of the first RAT.

4. The method (900) of claim 1, wherein:
the device comprises a plurality of antennas;
the DL transmission in the DL timeslot is configured to utilize the plurality of antennas; and
the rescheduling (910) comprises rescheduling the scheduled measurement for the second RAT for a time period when at least one of the plurality of antennas is available.

5. The method (900) of claim 1, further comprising:
scheduling (915) a measurement for the first RAT to avoid overlapping with the DL transmission in the DL timeslot for the first RAT.

6. The method (900) of claim 5, wherein:
the device comprises a plurality of antennas; the DL transmission in the DL timeslot is configured to utilize the plurality of antennas; and
the scheduling (915) comprises scheduling the measurement for the first RAT for a time period when at least one of the plurality of antennas is available.

7. The method (900) of claim 1, wherein the scheduled measurement comprises an inter-RAT measurement.

8. The method of claim 1, wherein the scheduled measurement comprises an out of service, OOS, search for the second RAT.

9. The method (900) of claim 1, wherein the device comprises a dual-SIM, dual-standby, DSDS, device, and the method further comprises operating the device in a, DSDS, mode.

10. An apparatus for wireless communication for utilizing a first radio access technology,RAT, and a second RAT comprises:
means for determining (905), based at least in part on a time-division duplexing,TDD, configuration of the first RAT, that a downlink,DL, transmission in a DL timeslot for the first RAT and a scheduled measurement for the second RAT at least partially overlap in time during a first subframe of a frame;
means for rescheduling (910) the scheduled measurement for the second RAT to a second subframe of the frame to avoid overlapping with the DL transmission in the DL timeslot for the first RAT; and
means for performing (920) the scheduled measurement for the second RAT based on the rescheduling.

11. A non-transitory computer-readable medium storing instructions thereon, the instructions executable by a processor to:
determine (905), based at least in part on a time-division duplexing,TDD, configuration of a first radio access technology,RAT, that a downlink,DL, transmission in a DL timeslot for the first RAT and a scheduled measurement for a second RAT at least partially overlap in time during a first subframe of a frame;
reschedule (910) the scheduled measurement for the second RAT to a second subframe of the frame to avoid overlapping with the DL transmission in the DL timeslot for the first RAT; and
perform (920) the scheduled measurement for the second RAT based on the rescheduling.

## Patentansprüche

1. Ein Verfahren (900) zur Drahtloskommunikation mit einer Einrichtung, das konfiguriert ist zur Kommunikation unter Verwendung einer ersten Funkzugriffstechnologie bzw. RAT (RAT = radio access technology) und einer zweiten RAT, wobei das Verfahren Folgendes aufweist:
Bestimmen (905), basierend wenigstens teilweise auf einer TDD- bzw. Zeitduplexing-Konfiguration (TDD = time-division duplexing) der ersten RAT, dass sich eine Abwärtsverbindungs- bzw. DL-Sendung (DL = downlink) in einem DL-Zeitschlitz für die erste RAT und eine eingeteilte Messung für die zweite RAT wenigstens teilweise zeitlich während eines ersten Subrahmens eines Rahmens überlappen;
Neueinteilen (910) der eingeteilten Messung für die zweite RAT auf einen zweiten Subrahmen des Rahmens, um ein Überlappen mit der zweiten DL-Sendung in dem DL-Zeitschlitz für die erste RAT zu vermeiden; und
Durchführen (920) der eingeteilten Messung für die zweite RAT basierend auf der Neueinteilung.

2. Verfahren (900) nach Anspruch 1, das weiter Folgendes aufweist:
Identifizieren der TDD-Konfiguration der ersten RAT.

3. Verfahren (900) nach Anspruch 1, wobei das Neueinteilen (910) Neueinteilen der eingeteilten Messung für die zweite RAT während eines Aufwärtsverbindunga- bzw. UL-Zeitschlitzes (UL = uplink) der ersten RAT aufweist.

4. Verfahren (900) nach Anspruch 1, wobei:
die Einrichtung eine Vielzahl von Antennen aufweist;
die DL-Sendung in dem DL-Zeitschlitz konfiguriert ist zum Verwenden der Vielzahl von Antennen; und
das Neueinteilen (910) Neueinteilen der eingeteilten Messung für die zweite RAT für eine Zeitperiode aufweist, wenn wenigstens eine der Vielzahl von Antennen verfügbar ist.

5. Verfahren (900) nach Anspruch 1, das weiter Folgendes aufweist:
Einteilen (915) einer Messung für die erste RAT zum Vermeiden einer Überlappung mit der zweiten DL-Sendung in dem DL-Zeitschlitz für die erste RAT.

6. Verfahren (900) nach Anspruch 5, wobei:
die Einrichtung eine Vielzahl von Antennen aufweist; die DL-Sendung in dem DL-Zeitschlitz konfiguriert ist zum Verwenden der Vielzahl von Antennen; und
das Einteilen (915) Einteilen der Messung für die erste RAT für eine Zeitperiode aufweist, wenn wenigstens eine der Vielzahl von Antennen verfügbar ist.

7. Verfahren (900) nach Anspruch 1, wobei die eingeteilte Messung eine Inter-RAT-Messung aufweist.

8. Verfahren nach Anspruch 1, wobei die eingeteilte Messung eine Außer-Betrieb- bzw. OOS-Suche (OOS = out of service) für die zweite RAT aufweist.

9. Verfahren (900) nach Anspruch 1, wobei die Einrichtung eine Dual-SIM-Dual-Standby- bzw. DSDS-Einrichtung aufweist und das Verfahren weiter Betreiben der Einrichtungen einem DSDS-Modus aufweist.

10. Eine Vorrichtung zur Drahtloskommunikation zum Nutzen einer ersten Funkzugriffstechnologie bzw. RAT (RAT = radio access technology) und einer zweiten RAT, die Folgendes aufweist:
Mittel zum Bestimmen (905), basierend wenigstens teilweise auf einer TDD- bzw. Zeitduplexing-Konfiguration (TDD = time-division duplexing) der ersten RAT, dass sich eine Abwärtsverbindungs- bzw. DL-Sendung (DL = downlink) in einem DL-Zeitschlitz für die erste RAT und eine eingeteilte Messung für die zweite RAT wenigstens teilweise zeitlich während eines ersten Subrahmens eines Rahmens überlappen;
Mittel zum Neueinteilen (910) der eingeteilten Messung für die zweite RAT auf einen zweiten Subrahmen des Rahmens, um ein Überlappen mit der zweiten DL-Sendung in dem DL-Zeitschlitz für die erste RAT zu vermeiden; und
Mittel zum Durchführen (920) der eingeteilten Messung für die zweite RAT basierend auf der Neueinteilung.

11. Ein nicht transitorisches computerlesbares Medium, das Instruktionen darauf speichert, wobei die Instruktionen durch einen Prozessor ausgeführt werden können zum:
Bestimmen (905), basierend wenigstens teilweise auf einer TDD- bzw. Zeitduplexing-Konfiguration (TDD = time-division duplexing) der ersten Funkzugriffstechnologie bzw. RAT (RAT = radio access technology), dass sich eine Abwärtsverbindungs- bzw. DL-Sendung (DL = downlink) in einem DL-Zeitschlitz für die erste RAT und eine eingeteilte Messung für eine zweite RAT wenigstens teilweise zeitlich während eines ersten Subrahmens eines Rahmens überlappen;
Neueinteilen (910) der eingeteilten Messung für die zweite RAT auf einen zweiten Subrahmen des Rahmens, um ein Überlappen mit der zweiten DL-Sendung in dem DL-Zeitschlitz für die erste RAT zu vermeiden; und
Durchführen (920) der eingeteilten Messung für die zweite RAT basierend auf der Neueinteilung.

## Revendications

1. Un procédé (900) de communication sans fil avec un dispositif configuré pour une communication utilisant une première technologie d'accès radio, RAT, et une deuxième RAT, le procédé comprenant :
la détermination (905), en fonction au moins en partie d'une configuration à duplexage par répartition dans le temps, TDD, de la première RAT, qu'une transmission en liaison descendante, DL dans un intervalle temporel DL pour la première RAT et une mesure planifiée pour la deuxième RAT se chevauchent temporellement au moins partiellement au cours d'une première sous-trame d'une trame,
la replanification (910) de la mesure planifiée pour la deuxième RAT vers une deuxième sous-trame de la trame de façon à éviter un chevauchement avec la transmission DL dans l'intervalle temporel DL pour la première RAT, et
l'exécution (920) de la mesure planifiée pour la deuxième RAT en fonction de la replanification.

2. Le procédé (900) selon la Revendication 1, comprenant en outre :
l'identification de la configuration TDD de la première RAT.

3. Le procédé (900) selon la Revendication 1, où la replanification (910) comprend la replanification de la mesure planifiée pour la deuxième RAT au cours d'un intervalle temporel en liaison montante, UL, de la première RAT.

4. Le procédé (900) selon la Revendication 1, où :
le dispositif comprend une pluralité d'antennes,
la transmission DL dans l'intervalle temporel DL est configurée de façon à utiliser la pluralité d'antennes, et
la replanification (910) comprend la replanification de la mesure planifiée pour la deuxième RAT pendant une période temporelle pendant laquelle au moins une antenne de la pluralité d'antennes est disponible.

5. Le procédé (900) selon la Revendication 1, comprenant en outre :
la planification (915) d'une mesure pour la première RAT de façon à éviter un chevauchement avec la transmission DL dans l'intervalle temporel DL pour la première RAT.

6. Le procédé (900) selon la Revendication 5, où :
le dispositif comprend une pluralité d'antennes, la transmission DL dans l'intervalle temporel DL est configurée de façon à utiliser la pluralité d'antennes, et
la planification (915) comprend la planification de la mesure pour la première RAT pendant une période temporelle pendant laquelle au moins une antenne de la pluralité d'antennes est disponible.

7. Le procédé (900) selon la Revendication 1, où la mesure planifiée comprend une mesure inter-RAT.

8. Le procédé selon la Revendication 1, où la mesure planifiée comprend une recherche hors service, OOS, de la deuxième RAT.

9. Le procédé (900) selon la Revendication 1, où le dispositif comprend un dispositif à double veille, à double carte SIM, DSDS, et le procédé comprend en outre l'actionnement du dispositif dans un mode DSDS.

10. Un appareil de communication sans fil destiné à une utilisation d'une première technologie d'accès radio, RAT, et d'une deuxième RAT, comprenant :
un moyen de détermination (905), en fonction au moins en partie d'une configuration à duplexage par répartition dans le temps, TDD, de la première RAT, qu'une transmission en liaison descendante, DL, dans un intervalle temporel DL pour la première RAT et une mesure planifiée pour la deuxième RAT se chevauchent temporellement au moins partiellement au cours d'une première sous-trame d'une trame,
un moyen de replanification (910) de la mesure planifiée pour la deuxième RAT vers une deuxième sous-trame de la trame de façon à éviter un chevauchement avec la transmission DL dans l'intervalle temporel DL pour la première RAT, et
un moyen d'exécution (920) de la mesure planifiée pour la deuxième RAT en fonction de la replanification.

11. Un support lisible par ordinateur non transitoire conservant en mémoire des instructions sur celui-ci, les instructions étant exécutables par un processeur de façon à :
déterminer (905), en fonction au moins en partie d'une configuration à duplexage par répartition dans le temps, TDD, d'une première technologie d'accès radio, RAT, qu'une transmission en liaison descendante, DL, dans un intervalle temporel DL pour la première RAT et une mesure planifiée pour une deuxième RAT se chevauchent temporellement au moins partiellement au cours d'une première sous-trame d'une trame,
replanifier (910) la mesure planifiée pour la deuxième RAT vers une deuxième sous-trame de la trame de façon à éviter un chevauchement avec la transmission DL dans l'intervalle temporel DL pour la première RAT, et
exécuter (920) la mesure planifiée pour la deuxième RAT en fonction de la replanification.
